# EUROPÄISCHE PATENTSCHRIFT

(11) **EP 3 074 153 B1**
(45) Veröffentlichungstag und Bekanntmachung des Hinweises auf die Patenterteilung: **15.08.2018**
(21) Anmeldenummer: 14802395.5
(22) Anmeldetag: 18.11.2014
(51) Int. Cl.: B22D 2/00, C21C 5/46, C21C 5/52, F27D 21/00

(54) **VERFAHREN ZUM ERFASSEN DES SCHMELZE- UND/ODER SCHLACKENNIVEAUS IN EINEM OFENGEFÄSS**
METHOD FOR DETERMINING THE MELT AND/OR SLAG LEVEL IN A FURNACE VESSEL
PROCÉDÉ DE DÉTECTION DU NIVEAU DE SCORIE ET/OU DE MATIÈRE EN FUSION DANS UNE CUVE DE FOUR

(30) Priorität: 28.11.2013 DE 102013224371; 14.02.2014 DE 102014202714; 26.05.2014 DE 102014209981
(43) Veröffentlichungstag der Anmeldung: 05.10.2016
(73) Patentinhaber: SMS group GmbH, 40237 Düsseldorf (DE)
(72) Erfinder: FEHLEMANN, Gereon, 40489 Düsseldorf (DE); KUMMER, Karl-Heinz, 47249 Duisburg (DE); BARTZ, Boris, 40472 Düsseldorf (DE)
(74) Vertreter: Klüppel, Walter
(86) Internationale Anmeldenummer: PCT/EP2014/074936
(87) Internationale Veröffentlichungsnummer: WO 2015/078734

(56) Entgegenhaltungen:
- WO-A2-2004/015349
- WO-A2-2011/154179
- DE-A1-102009 060 639

## Beschreibung

Die Erfindung betrifft ein Verfahren zum Erfassen des Schmelze- und/oder Schlackenniveaus in einem Ofengefäß.

Zur sicheren Prozessführung eines Schmelzprozesses in einem Schmelzofen ist es notwendig, das Schlackenniveau bzw. das Niveau des flüssigen Metalls (Schmelze) zu ermitteln. Hierzu stehen verschiedene Möglichkeiten zur Verfügung.

Zunächst sind Verfahren bekannt, bei denen mit Hilfe einer Stahlstange oder mit Hilfe von Temperatursensoren das Badniveau ermittelt wird.

Im erstgenannten Fall wird von der Ofendecke aus eine Stahlstange in das Bad definiert eingetaucht. Über die Anhaftungen der Schlacke an der Stange werden dann nach dem Herausziehen der Stange aus dem Ofengefäß die beiden Niveaus der Schlacke und der flüssigen Schmelze durch optische Begutachtung ermittelt. Dieses Verfahren hat allerdings folgende Nachteile: Bei einer zu niedrigen Ofentemperatur oder zu viel Calcine auf der Schlacke kann die Stange nicht in das Bad eintauchen. Aus Sicherheitsgründen kann diese Messung mitunter nicht während des Ofenbetriebs durchgeführt werden. Es ist keine kontinuierliche Erfassung der Höhe von Metall und Schlacke möglich. Die manuell erfassten Daten können nicht zur Prozessregelung genutzt werden, wodurch die Gefahr besteht, dass das Metall- und Schlackenbad zu hoch gefahren wird und damit der Schmelzofen geschädigt wird. Die Messung erfolgt meist nur an einer Stelle. Das

Niveau der flüssigen Schmelze ist allerdings nur parallel, wenn kein Material abgestochen wird. Bei einem Abstich sinkt der Badspiegel in Richtung des Abstichlochs ab. Da das Calcine meist kegelförmig auf der Schmelze bzw. Schlacke aufliegt, ist eine Ermittlung der Höhenniveaus in verschiedenen Bereichen des Ofens nicht möglich.

Des weiteren ist ein anderes Verfahren bekannt, bei dem punktuell messende elektrische Thermofühler zum Einsatz kommen, die sich an der Außenverkleidung des Ofengefäßes befinden. Die Außenwand der Schmelzöfen besteht aus einer Ausmauerung, die durch Kühlelemente aus einem stark wärmeleitenden Material gekühlt wird. In die Ausmauerung oder auch in die Kühlelemente werden die Thermofühler waagerecht eingebracht. Ihre Messspitze ist in Richtung der Schmelze ausgerichtet. Mehrere Thermoelemente sind spaltenweise von oben nach unten angeordnet. Dieses Verfahren hat folgende Nachteile: Die konstruktive Bauart des Ofens definiert meist den Abstand der Kühlelemente untereinander. Zur Abdeckung der gesamten Höhe ist in Abhängigkeit der erforderlichen Messgenauigkeit eine große Zahl an Thermofühlern notwendig, die untereinander angeordnet sind. Mit diesem Verfahren ist eine Temperaturmessung nur an der Außenwandung des Ofens möglich. Die Thermofühler verursachen einen großen Verdrahtungsaufwand, der störanfällig ist.

Bekannt ist auch der Einsatz von Lichtwellenleitern zur Erfassung von Temperaturen. Die WO 2011/154179 A2 offenbart eine Einrichtung zur Temperaturmessung in einem Konverter, wobei vorgesehen ist das in unterschiedlichen Höhen der Konverter mit Mess-Steinen versehen ist, wobei letztere Lichtwellenleiter aufweisen. Ähnliche und andere Lösungen offenbaren die WO 2004/015349 A2 und die DE 10 2009 060 638 A1**.** Aus der DE 10 2010 034 315 A1 ist ein Verfahren zum Erfassen der Temperaturzustände in einer metallurgischen Anlage, wie z.B. ein Lichtbogenofen, ein Konverter oder eine Blaslanze bekannt, wobei ein Lichtwellenleiter in eine Wandung der mit Schmelze in Berührung kommenden Bauteile eingebettet wird. Der Erfindung liegt daher die Aufgabe zugrunde, ein Verfahren der eingangs genannten Art so fortzubilden, dass eine genaue Erfassung des Temperaturverlaufs des sich im Ofengefäß befindlichen Materials (Schlacke und Schmelze) möglich ist, wobei die oben genannten Nachteile vermieden werden sollen. Insbesondere soll die Schlackenhöhe im Ofengefäß in einfacher und genauer Weise erfasst werden können.

Die Lösung dieser Aufgabe durch die Erfindung zeichnet sich dadurch aus, dass das Verfahren die folgenden Schritte umfasst:
a) Bereitstellen einer Messsonde, wobei diese eine sich längserstreckende Struktur aufweist und wobei sich in der Messsonde ein in Richtung der Längsachse der Messsonde erstreckender Hohlraum befindet;
b) Platzieren eines Lichtwellenleiters im Hohlraum der Messsonde, wobei der Lichtwellenleiter in der Messsonde wieder zerstörungsfrei entfernbar platziert wird;
c) Eintauchen der Messsonde samt Lichtwellenleiter in das sich im Ofengefäß befindliche schmelzflüssige Gut;
d) Ermittlung des Temperaturverlaufs zumindest über einen Teil der Längserstreckung der Messsonde durch faseroptische Temperaturmessung,
wobei das Verfahren den Austausch der Messsonde nach einer vorgegebenen Zeit oder nach einem vorgegebenen Verschleißzustand der Messsonde umfasst, wobei der Lichtwellenleiter in einer neuen Messsonde platziert wird.

Demgemäß ist also vorgesehen, dass die Messsonde samt Lichtwellenleiter in das zu messende Gut durch direktes Eintauchen in das schmelzflüssige Gut eingebracht wird.

Vorzugsweise erfolgt das Eintauchen der Messsonde samt Lichtwellenleiter gemäß obigem Schritt c) vertikal. Es ist aber auch möglich, dass das Eintauchen der Messsonde samt Lichtwellenleiter unter einem Winkel größer als 0° zur vertikalen Richtung erfolgt; schließlich kann das Eintauchen der Messsonde samt Lichtwellenleiter auch horizontal erfolgen.

Als Material für die Messsonde wird bevorzugt ein gut wärmeleitendes Material verwendet. Hierbei kommt insbesondere Kupfer zum Einsatz.

Die Ermittlung des Temperaturverlaufs gemäß obigem Schritt d) erfolgt bevorzugt durch das Raman-Verfahren oder durch das Faser-Bragg-Verfahren (Detail hierzu s. unten).

Vorzugsweise wird zumindest während der obigen Schritte c) und d) ein Kühlmedium durch die Messsonde geleitet. Das Kühlmedium kann ein flüssiges oder ein gasförmiges Kühlmedium sein.

Die eingangs genannten Nachteile bei der Schlackenniveaumessung werden also erfindungsgemäß dadurch vermieden, dass statt der bekannten Verfahren eine Messsonde eingesetzt wird, die ein faseroptisches Temperaturmessverfahren per Lichtwellenleiter zur Erfassung des Temperaturverlaufs und insbesondere des Badniveaus nutzt. Dazu wird ein stark wärmeleitendes Material eingesetzt, in das ein Lichtwellenleiter eingebracht wird, der an mehreren Punkten die Temperatur mit einem faseroptischen Messverfahren ermittelt.

So ist es möglich, kontinuierlich genaue Messwerte zu erfassen, die direkt von der Prozessautomatisierung genutzt werden können.

Lichtwellenleiter haben den Vorteil, dass eine Faser mit Hilfe des Faser-Bragg-Verfahrens oder des Raman-Verfahrens an mehreren Stellen die Temperatur messen kann. Die Auswahl des zum Einsatz kommenden Verfahrens hängt von der benötigten Messfrequenz, dem erforderlichen Abstand der Messpunkte und der gewünschten Anzahl der Messstellen ab. Es hat sich dabei gezeigt, dass für Messungen mit niedriger Frequenz und großem Messabstand das Raman-Verfahren und für Messungen mit hoher Frequenz und engem Abstand der Messpunkte auf der Glasfaser das Faser-Bragg-Verfahren von Vorteil ist.

Der Temperatursensor (Lichtleitfaser) wird in der Messsonde platziert und diese über die Ofendecke in die Stahlschmelze eingeführt. Sie misst kontinuierlich über die hohe Anzahl der sich auf dem Sensor befindlichen Messpunkte des Lichtwellenleiters die Temperatur der Schmelze auf verschiedenen Ebenen bzw. Höhenniveaus. Entsprechend dem Abstand der Messpunkte auf dem Lichtwellenleiter kann die Messsonde die Temperatur auf unterschiedlichen Niveaus messen.

Der erfindungsgemäße Vorschlag bietet eine bessere Erfassung des Metall- und Schlackenniveaus als mit den vorbekannten Maßnahmen.

Zur faseroptischen Temperaturmessung seinen folgende generelle Anmerkungen gemacht: Es geht hierbei um den Einsatz von optoelektronischen Geräten zur Messung der Temperatur, wobei Glasfasern als lineare Sensoren benutzt werden. Faseroptische Systeme eignen sich nicht nur für die Informationsübertragung, sondern auch als örtlich verteilte Mess-Sensoren. Physikalische Messgrößen wie Temperatur oder Druck- und Zugkräfte können auf die Glasfaser einwirken und die Eigenschaften der Lichtleitungen in der Faser lokal ändern. Infolge der Dämpfung des Lichtes in den Quarzglasfasern durch Streuung kann der Ort einer äußeren physikalischen Einwirkung festgestellt werden, sodass der Lichtwellenleiter als linearer Sensor eingesetzt werden kann.

Zur Temperaturmessung mittels der erfindungsgemäß vorgesehenen Lichtwellenleitern aus Quarzglas eignet sich besonders der oben genannte Raman-Effekt. Das Licht in der Glasfaser streut hierbei an mikroskopisch kleinen Dichteschwankungen, die kleiner als die Wellenlänge des Lichts sind. In der Rückstreuung findet man neben dem elastischen Streuanteil (Rayleigh-Streuung) auf der gleichen Wellenlänge wie das eingestrahlte Licht auch zusätzliche Komponenten auf anderen Wellenlängen, die mit der Molekülschwingung und somit mit der lokalen Temperatur gekoppelt sind (sog. Raman-Streuung). Das faseroptische Temperaturmess-System basiert auf einem faseroptischen Raman-Rückstreuverfahren. Der eigentliche Temperatursensor ist der Lichtwellenleiter. Mit Hilfe eines Auswertegerätes, dem sog. optischen Raman-Reflektometer, können die Temperaturwerte in der Glasfaser des ortsaufgelöst bestimmt werden.

Das bekannteste Rückstreuverfahren ist das OTDR-Verfahren (OTDR: Optical Time Domain Reflectometry). Es arbeitet nach einem Puls-Echo-Verfahren, aus der Laufzeitdifferenz zwischen Aussenden und Detektion der Lichtpulse werden Streupegel und Streuort bestimmt.

In der Zeichnung ist ein Ausführungsbeispiel der Erfindung dargestellt. Es zeigen:
- Fig. 1: schematisch ein Ofengefäß, in dem sich eine Metallschmelze und Schlacke befindet, und
- Fig. 2: schematisch eine in die Schmelze und die Schlacke eingetauchte Messsonde sowie der sich durch die Messung ergebende Verlauf der Temperatur über der Eintauchhöhe der Messsonde in die Schmelze bzw. Schlacke.

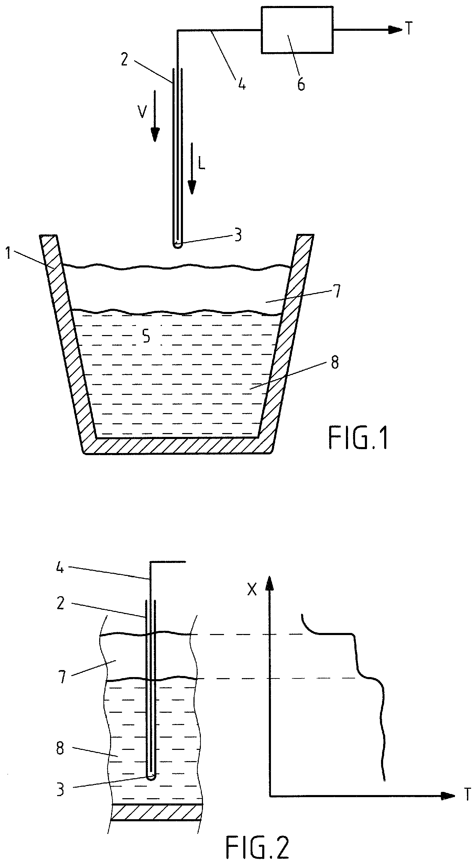

In Fig. 1 ist ein Ofengefäß 1 zu sehen, in dem schmelzflüssiges Gut 5 enthalten ist. Dieses Gut 5 ist eine Schichtung aus Schlacke 7 und Schmelze 8. Es geht vorliegend insbesondere darum, die Höhe der Schlacke 7 im Ofengefäß 1 zu bestimmen.

Hierfür wird eine Messsonde 2 eingesetzt, die im wesentlichen als Rohr ausgebildet ist, das an einem Ende verschlossen ist. Es hat eine Erstreckung in eine Längsachse L. In der Messsonde 2 ist ein Hohlraum 3 enthalten, der zur Aufnahme eines Lichtwellenleiters 4 ausgebildet ist.

Zur Bestimmung der Höhe der Schlacke 7 im Ofengefäß 1 wird der Lichtwellenleiter 4 in die Messsonde 2 eingeschoben, was in Fig. 1 schematisch dargestellt ist. Die Messsonde 2 samt Lichtwellenleiter 4 wird dann in vertikale Richtung V in das schmelzflüssige Material 5 im Ofengefäß 1 eingeschoben.

Dieser Zustand ist in der linken Figurenhälfte in Fig. 2 dargestellt. Die vom Lichtwellenleiter 4 kommenden Signale werden in einem Auswertegerät 6 ausgewertet, wofür das Raman-Verfahren oder das Faser-Bragg-Verfahren - wie oben erläutert - zum Einsatz kommt.

Demgemäß wird es möglich, den Verlauf der Temperatur T über der Höhenkoordinate x zu erfassen, wie es im Diagramm in der rechten Figurenhälfte von Fig. 2 dargestellt ist. Zu erkennen ist der Temperaturverlauf, der markante Änderungen des Verlaufs an den Stellen nimmt, an der die Messsonde 2 in die Schlacke 7 eintaucht und an der die Schlacke 7 in die Schmelze 8 übergeht.

Daher kann aus dem aufgenommenen Verlauf der Temperatur über der Höhenkoordinate x relativ genau auf die Höhe der Schlacke 7 im Ofengefäß 1 geschlossen werden.

Wie erläutert kann die Auswertung nach dem Faser-Bragg-Gitter-Verfahren (FBG-Verfahren) erfolgen. Hierbei werden geeignete Lichtwellenleiter verwendet, die Messstellen mit einer periodischen Variation des Brechungsindexes bzw. Gitters mit solchen Variationen eingeprägt bekommen. Diese periodische Variation des Brechungsindexes führt dazu, dass der Lichtwellenleiter in Abhängigkeit der Periodizität für bestimmte Wellenlängen an den Messstellen einen dielektrischen Spiegel darstellt. Durch eine Temperaturänderung an einem Punkt wird die Bragg-Wellenlänge verändert, wobei genau diese reflektiert wird. Licht, das die Bragg-Bedingung nicht erfüllt, wird durch das Bragg-Gitter nicht wesentlich beeinflusst.

Die verschiedenen Signale der unterschiedlichen Messstellen können dann aufgrund von Laufzeitunterschieden voneinander unterschieden werden. Der detaillierte Aufbau solcher Faser-Bragg-Gitter sowie die entsprechenden Auswerteeinheiten sind allgemein bekannt. Die Genauigkeit der Ortsauflösung ist durch die Anzahl der eingeprägten Messstellen gegeben. Die Größe einer Messstelle kann beispielsweise im Bereich von 1 mm bis 5 mm liegen.

Wie ebenfalls schon erwähnt, kann alternativ zur Messung der Temperatur auch das "Optical-Frequency-Domain-Reflectometry"-Verfahren (OFDR-Verfahren) oder das "Optical-Time-Domain-Reflectometry"-Verfahren (OTDR-Verfahren) eingesetzt werden. Diese Verfahren basieren auf dem Prinzip der faseroptischen Ramanrückstreuung, wobei ausgenutzt wird, dass eine Temperaturveränderung am Punkt eines Lichtleiters eine Veränderung der Ramanrückstreuung des Lichtwellenleitermaterials verursacht. Mittels der Auswerteeinheit (z. B. einem Raman-Reflektometer) können dann die Temperaturwerte entlang einer Faser ortsaufgelöst bestimmt werden, wobei bei diesem Verfahren über eine bestimmte Länge des Leiters gemittelt wird. Diese Länge beträgt ca. einige Zentimeter.

Die verschiedenen Messstellen werden wiederum durch Laufzeitunterschiede voneinander getrennt. Der Aufbau solcher Systeme zur Auswertung nach den genannten Verfahren ist allgemein bekannt, ebenso wie die nötigen Laser, die das Laserlicht innerhalb des Lichtwellenleiters 4 erzeugen.

Somit wird es möglich, den Füllstand der Schmelze im Ofengefäß 1 mit Hilfe einer Vielzahl von Messpunkten genau zu bestimmen. Gleichermaßen kann die Höhe der Schlacke im Ofengefäß genau bestimmt werden; insbesondere kann die Dicke der Schlackenschicht oberhalb der Schmelze im Ofengefäß gemessen werden.

Die Messsonde 2 ist bevorzugt aus einem Material gefertigt, das einerseits wärmeleitend ist, andererseits aber dem chemischen Angriff der Schlacke bzw. der Schmelze gut standhalten kann.

Ein Austausch der Messsonde erlaubt die Wieder- bzw. Weiterverwendung des Lichtwellenleiters, nachdem die Messsonde einen entsprechenden Verschleiß erlitten hat und durch eine neue Sonde ersetzt wird.

### Bezugszeichenliste:

- 1: Ofengefäß
- 2: Messsonde
- 3: Hohlraum
- 4: Lichtwellenleiter
- 5: schmelzflüssiges Gut
- 6: Auswertegerät
- 7: Schlacke
- 8: Schmelze

- T: Temperatur
- x: Höhenkoordinate
- L: Längsachse
- V: Vertikale

## Patentansprüche

1. Verfahren zum Erfassen des Schmelze- und/oder Schlackenniveaus in einem Ofengefäß (1), umfassend die Schritte:
a) Bereitstellen einer Messsonde (2), wobei diese eine sich längserstreckende Struktur aufweist und wobei sich in der Messsonde (2) ein in Richtung der Längsachse (L) der Messsonde (2) erstreckender Hohlraum (3) befindet;
b) Platzieren eines Lichtwellenleiters (4) im Hohlraum (3) der Messsonde (2), wobei der Lichtwellenleiter (4) in der Messsonde (2) zerstörungsfrei entfernbar platziert wird;
c) Eintauchen der Messsonde (2) samt Lichtwellenleiter (4) in das sich im Ofengefäß befindliche schmelzflüssige Gut (5);
d) Ermittlung des Temperaturverlaufs (T = T(x)) zumindest über einen Teil der Längserstreckung der Messsonde (2) durch faseroptische Temperaturmessung,
wobei das Verfahren den Austausch der Messsonde (2) nach einer vorgegebenen Zeit oder nach einem vorgegebenen Verschleißzustand der Messsonde (2) umfasst, wobei der Lichtwellenleiter (4) in einer neuen Messsonde (2) platziert wird.

2. Verfahren nach Anspruch 1, **dadurch gekennzeichnet, dass** das Eintauchen der Messsonde (2) samt Lichtwellenleiter (4) gemäß Schritt c) von Anspruch 1 vertikal (V) erfolgt.

3. Verfahren nach Anspruch 1, **dadurch gekennzeichnet, dass** das Eintauchen der Messsonde (2) samt Lichtwellenleiter (4) gemäß Schritt c) von Anspruch 1 unter einem Winkel größer als 0° zur vertikalen Richtung (V) erfolgt.

4. Verfahren nach Anspruch 1, **dadurch gekennzeichnet, dass** das Eintauchen der Messsonde (2) samt Lichtwellenleiter (4) gemäß Schritt c) von Anspruch 1 horizontal erfolgt.

5. Verfahren nach einem der Ansprüche 1 bis 4, **dadurch gekennzeichnet, dass** als Material für die Messsonde (2) ein gut wärmeleitendes Material verwendet wird.

6. Verfahren nach Anspruch 5, **dadurch gekennzeichnet, dass** als Material für die Messsonde (2) Kupfer verwendet wird.

7. Verfahren nach einem der Ansprüche 1 bis 6, **dadurch gekennzeichnet, dass** die Ermittlung des Temperaturverlaufs (T = f(x)) gemäß Schritt d) von Anspruch 1 durch das Raman-Verfahren erfolgt.

8. Verfahren nach einem der Ansprüche 1 bis 6, **dadurch gekennzeichnet, dass** die Ermittlung des Temperaturverlaufs (T = f(x)) gemäß Schritt d) von Anspruch 1 durch das Faser-Bragg-Verfahren erfolgt.

9. Verfahren nach einem der Ansprüche 1 bis 8, **dadurch gekennzeichnet, dass** zumindest während der Schritte c) und d) von Anspruch 1 ein Kühlmedium durch die Messsonde (2) geleitet wird.

10. Verfahren nach Anspruch 9, **dadurch gekennzeichnet, dass** ein flüssiges Kühlmedium verwendet wird.

11. Verfahren nach Anspruch 9, **dadurch gekennzeichnet, dass** ein gasförmiges Kühlmedium verwendet wird.

## Claims

1. Method of detecting the level of melt and/or slag in a furnace vessel (1), comprising the steps:
a) providing a measuring probe (2), wherein this has an elongate structure and wherein cavity (3) extending in the direction of the longitudinal axis (L) of the measuring probe (2) is present in the measuring probe (2);
b) placing an optical waveguide (4) in the cavity (3) of the measuring probe (2), wherein the optical waveguide (4) is placed in the measuring probe (2) to be removable without destruction;
c) immersing the measuring probe (2) inclusive of optical waveguide (4) in the molten material (5) present in the furnace vessel; and
d) determining the temperature plot (T = T(x)) over at least a part of the length of the measuring probe (2) by fibre-optical temperature measurement,
wherein the method comprises exchange of the measuring probe (2) after a predetermined time or after a predetermined state of wear of the measuring probe (2), the optical waveguide (4) being placed in a new measuring probe (2).

2. Method according to claim 1, **characterised in that** the immersion of the measuring probe (2) inclusive of optical waveguide (4) in accordance with step c) of claim 1 takes place vertically (V).

3. Method according to claim 1, **characterised in that** the immersion of the measuring probe (2) inclusive of optical waveguide (4) in accordance with step c) of claim 1 takes place at an angle greater than 0° with respect to the vertical direction (V).

4. Method according to claim 1, **characterised in that** the immersion of the measuring probe (2) inclusive of optical waveguide (4) in accordance with step c) of claim 1 takes place horizontally.

5. Method according to any one of claims 1 to 4, **characterised in that** a material with good thermal conductivity is used as material for the measuring probe (2).

6. Method according to claim 5, **characterised in that** copper is used as material for the measurement probe (2).

7. Method according to any one of claims 1 to 6, **characterised in that** determination of the temperature plot (T = f(x)) in accordance with step d) of claim 1 is carried out by the Raman method.

8. Method according to any one of claims 1 to 6, **characterised in that** determination of the temperature plot (T = f(x)) in accordance with step d) of claim 1 is carried out by the fibre Bragg method.

9. Method according to any one of claims 1 to 8, **characterised in that** a cooling medium is conducted through the measuring probe (2) at least during the steps c) and d) of claim 1.

10. Method according to claim 9, **characterised in that** a liquid cooling medium is used.

11. Method according to claim 9, **characterised in that** a gaseous cooling medium is used.

## Revendications

1. Procédé pour détecter le niveau de masse fondue et/ou de laitier dans une cuve de four (1), comprenant les étapes:
a) prévoir une sonde de mesure (2) où celle-ci présente une structure s'étendant longitudinalement et où une cavité (3) est située dans la sonde de mesure (2) en s'étendant dans la direction de l'axe longitudinal (L) de la sonde de mesure (2);
b) placer un guide d'onde optique (4) dans la cavité (3) de la sonde de mesure (2), où le guide d'onde optique (4) est placée dans la sonde de mesure (2) de façon amovible non-destructive;
c) immersion de la sonde de mesure (2) y compris le guide d'onde optique (4) dans la matière fondue (5) située dans la cuve du four;
d) détermination du profil de température (T = T (x)) sur au moins une partie de l'étendue longitudinale de la sonde de mesure (2) par mesure de température par fibre optique,
le procédé comprenant le remplacement de la sonde de mesure (2) après un temps prédéterminé ou après un état d'usure prédéterminée de la sonde de mesure (2), où le guide d'onde optique (4) est placé dans une nouvelle sonde de mesure (2).

2. Procédé selon la revendication 1, **caractérisé en ce que** l'immersion de la sonde de mesure (2) avec le guide d'onde optique (4) selon l'étape c) de la revendication 1 est effectuée verticalement (V).

3. Procédé selon la revendication 1, **caractérisé en ce que** l'immersion de la sonde de mesure (2) avec le guide d'onde optique (4) selon l'étape c) de la revendication 1 est effectuée selon un angle supérieur à 0° par rapport à la direction verticale (V).

4. Procédé selon la revendication 1, **caractérisé en ce que** l'immersion de la sonde de mesure (2) avec le guide d'onde optique (4) selon l'étape c) de la revendication 1 est effectuée à l'horizontale.

5. Procédé selon l'une quelconque des revendications 1 à 4, **caractérisé en ce qu'**un matériau bon conducteur thermique est utilisé comme matériau pour la sonde de mesure (2).

6. Procédé selon la revendication 5, **caractérisé en ce que** du cuivre est utilisé comme matériau pour la sonde de mesure (2).

7. Procédé selon l'une des revendications 1 à 6, **caractérisé en ce que** la détermination du profil de température (T = f(x)) selon l'étape d) de la revendication 1 est effectuée par la méthode Raman.

8. Procédé selon l'une quelconque des revendications 1 à 6, **caractérisé en ce que** la détermination du profil de température (T = f(x)) selon l'étape d) de la revendication 1 est effectuée par la méthode des fibres de Bragg.

9. Procédé selon l'une quelconque des revendications 1 à 8, **caractérisé en ce qu'**au moins lors des étapes c) et d) de la revendication 1, on fait passer un médium de refroidissement à travers la sonde de mesure (2).

10. Procédé selon la revendication 9, **caractérisé en ce qu'**un médium de refroidissement liquide est utilisé.

11. Procédé selon la revendication 9, **caractérisé en ce qu'**un médium de refroidissement gazeux est utilisé.
